# EUROPÄISCHE PATENTSCHRIFT

(11) **EP 1 438 823 B1**
(45) Veröffentlichungstag und Bekanntmachung des Hinweises auf die Patenterteilung: **11.11.2009**
(21) Anmeldenummer: 02772238.8
(22) Anmeldetag: 30.08.2002
(51) Int. Cl.: H04L 29/06, H04M 7/00, H04Q 3/00

(54) **VERFAHREN ZUR ÜBERTRAGUNG VON SIGNALTÖNEN IN HETEROGENEN NETZEN, VORRICHTUNG UND COMPUTERPROGRAMMPRODUKT**
METHOD FOR THE TRANSMISSION OF SIGNAL TONES IN HETEROGENEOUS NETWORKS, DEVICE AND COMPUTER PROGRAMME PRODUCT
PROCEDE DE TRANSMISSION DES TONALITES DE SIGNALISATION DANS DES RESEAUX HETEROGENES, DISPOSITIF ET PRODUIT DE PROGRAMME INFORMATIQUE

(30) Priorität: 22.10.2001 EP 01125074
(43) Veröffentlichungstag der Anmeldung: 21.07.2004
(73) Patentinhaber: Nokia Siemens Networks GmbH & Co. KG, 81541 München (DE)
(72) Erfinder: BAUMANN, Thomas, 83607 Holzkirchen (DE)
(86) Internationale Anmeldenummer: PCT/EP2002/009692
(87) Internationale Veröffentlichungsnummer: WO 2003/036905

(56) Entgegenhaltungen:
- WO-A-00/77992
- WO-A-01/28256
- WO-A-01/43389
- US-B1- 6 259 691
- HARASAKI K ET AL: "SIGNALING GATEWAY CX6100-SG" NEC RESEARCH AND DEVELOPMENT, NIPPON ELECTRIC LTD. TOKYO, JP, Bd. 42, Nr. 2, April 2001 (2001-04), Seiten 138-142, XP001036305 ISSN: 0547-051X

## Beschreibung

Die Erfindung betrifft ein Verfahren zur Auswahl eines Übertragungsverfahrens von digitalen Signaltönen in heterogenen Netzen. Die Erfindung betrifft ferner eine Vorrichtung und ein Computerprogrammprodukt, die zur Ausführung des Verfahrens eingerichtet sind.

Die erwähnten Signaltöne sind beispielsweise sogenannte DTMF(Dual Tone Multi Frequency)-Digits. Im folgenden werden die DTMF-Digits als DTMF-Signaltöne oder kurz als Signaltöne bezeichnet. Bei einer Telefonverbindung ist es häufig notwendig, daß einer der Gesprächsteilnehmer DTMF-Signaltöne eingibt, die zur Gegenstelle transportiert werden müssen. Dies ist beispielsweise bei der Kontoabfrage bei einer Direktbank der Fall.

Telefonverbindungen erfolgen zur Zeit über zwei Arten von Kommunikationsnetzen: das klassische, leitungsorientierte Telefonnetz, das hauptsächlich der Übermittlung von Sprache dient, und das paketorientierte Datennetz, das vor allem zur Übermittlung von Daten eingerichtet ist. Das leitungsorientierte Telefonnetz wird nachfolgend kurz als Leitungsnetz und das paketorientierte Datennetz als Paketnetz bezeichnet.

In den klassischen Leitungsnetzen werden nicht nur Informationen zwischen den Verbindungsteilnehmern ausgetauscht. Vielmehr werden auch Informationen ausgetauscht, die die Steuerung des Leitungsnetzes selbst betreffen. Diese Informationen gelangen nicht notwendig zu den Verbindungsteilnehmern an den Endgeräten, sondern werden von den Netzknoten oder Endgeräten ausgewertet. Der Austausch dieser Informationen wird als Signalisierung bezeichnet. Da für die Signalisierung in den Leitungsnetzen im allgemeinen definierte Kommunikationswege reserviert sind, spricht man auch von Signalisierungsnetzen. Grundsätzlich kann die Signalisierung für ein Leitungsnetz auch über ein Paketnetz erfolgen.

Daneben besteht die Tendenz, zur Übermittlung von Informationen, die bislang über das klassische Leitungsnetz geführt wurden, auch Paketnetze zu verwenden. Da dann die entsprechenden Informationen nicht nur über das klassische Leitungsnetz, sondern auch über Paketnetze geführt werden, spricht man in diesem Zusammenhang von heterogenen Netzen.

Die Übertragung der DTMF-Signaltöne muß auch dann erfolgen, wenn eine klassische Telefonverbindung über ein Paketnetz erfolgt. Die Telefon- oder Sprachverbindung über ein Paketnetz wird auch als VoIP(Voice over IP)-Verbindung bezeichnet. Die Übertragung der DTMF-Signaltöne über das Paketnetz ist problemlos möglich, wenn es sich bei dem Paketnetz um ein IP(Internet Protocol)-Netz handelt und wenn für die Sprachübertragung ein nicht-komprimierender Codec, zum Beispiel G.711, verwendet wird, da in diesem Fall der Transport der digitalen Signaltöne problemlos zusammen mit der Sprachinformation im RTP (Real Time Protocol)-Datenstrom möglich ist.

Falls jedoch ein komprimierender Codec für die Sprachübertragung benützt wird, zum Beispiel G.723 oder G.729, ist es nicht möglich, die digitalen Signaltöne ohne weiteres im RTP-Datenstrom zu übertragen, da die DTMF-Signaltöne nicht ohne Frequenzverfälschung übertragen werden.

Falls komprimierende Codecs für die Sprachübertragung verwendet werden, gibt es grundsätzlich zwei standardisierte Möglichkeiten, die DTMF-Signaltöne dennoch zu übertragen.

Zum einen besteht die Möglichkeit, die DTMF-Signaltöne im RTP-Datenstrom mit speziellen RTP-Paketen gemäß RFC2833 (RTP Payload for DTMF Digits, Telephony Tones and Telephony Signals) zu übertragen. Dieses Verfahren wird nachfolgend kurz als RTP-Übertragung bezeichnet.

Außerdem besteht die Möglichkeit, die DTMF-Signaltöne im Media Gateway aus dem RTP-Datenstrom zu entfernen und unter Umgehung des Paketnetzes über die Media Gateway Controller mittels MGCP (Media Gateway Control)- und BICC (Bearer Independent Call Control)-Protokoll zu übertragen. Dieses Verfahren wird nachfolgend kurz als OUTBAND-Übertragung bezeichnet.

Allerdings treten in heterogenen Netzen, in denen sowohl Media Gateways der ersten Generation als auch neuere Media Gateways vorhanden sind, Schwierigkeiten auf, weil einige Media Gateways die Übertragung der DTMF-Signaltöne nach RFC2833 unterstützen, wohingegen andere nur die OUTBAND-Übertragung, und wieder andere keine der beiden Möglichkeiten unterstützen.

Weitere Informationen zum Stand der Technik finden sich zum Beispiel in den Dokumenten US 6,259,691, WO 01/43389, WO 01/28256 oder WO 00/77992.

Der Erfindung liegt die Aufgabe zugrunde, die Auswahl eines Übermittlungsverfahrens von Signaltönen in heterogenen Netzen zu verbessern.

Diese Aufgabe wird erfindungsgemäß mit den durch die Ansprüche definierten Gegenständen gelöst.

Bei dem Verfahren gemäß der Erfindung wird während des Verbindungsaufbaus zwischen einer ersten und einer zweiten Übermittlungsstelle der zweiten Übermittlungsstelle von der ersten Übermittlungsstelle mit Hilfe des Signalisierungsnetzes die von der ersten Übermittlungsstelle unterstützten Obermittlungsverfahren mitgeteilt. Die zweite Übermittlungsstelle kann ein Übermittlungsverfahren auswählen, das von beiden Übermittlungsstellen unterstützt wird und seine Auswahl der ersten Übermittlungsstelle mitteilen. Die Übermittlungsstellen können dann beispielsweise eine Sprachverbindung über das Paketnetz unter Berücksichtigung des jeweils ausgewählten Übermittlungsverfahrens für die DTMF-Signaltöne einrichten. Durch das Verfahren gemäß der Erfindung ist sichergestellt, daß die DTMF-Signaltöne immer übertragen werden können, sofern beide Übermittlungsstellen ein gemeinsames Übermittlungsverfahren für die DTMF-Signaltöne unterstützen. Ohne die Anwendung des Verfahrens gemäß der Erfindung würde in den meisten Fällen keine Übertragung von DTMF-Signaltönen zustande kommen. Außerdem ist gewährleistet, daß bei verschiedenen Übermittlungsverfahren unterschiedlicher Qualität immer dasjenige Übermittlungsverfahren ausgewählt wird, das für die Übermittlung von DTMF-Signaltönen am geeignetsten ist.

Bei einer bevorzugten Ausführungsform des Verfahrens gemäß der Erfindung werden Übermittlungsstellen mit jeweils einem Konverter und einer Konvertersteuerung verwendet, die untereinander mit einem abgewandelten Standardprotokoll kommunizieren. Auch die Kommunikation zwischen den Konvertersteuerungen soll nach einem modifizierten Standardprotokoll erfolgen. Für die Kommunikation zwischen den Konvertern und der zugehörigen Konvertersteuerung kommt zum Beispiel das MGCP nach RFC2705 und für die Kommunikation zwischen den Konvertersteuerungen das BICC-Protokoll nach Q.763/Q.765.5 in einer modifizierten Form in Frage.

Diese Ausführungsform bietet den Vorteil, daß bestehende Protokolle für die Ausführung des Verfahrens gemäß der Erfindung nur leicht modifiziert werden müssen. Dementsprechend können bestehende Übermittlungsstellen ohne großen Aufwand in die Lage versetzt werden, das Verfahren gemäß der Erfindung auszuführen.

Weitere Einzelheiten sind Gegenstand der abhängigen Ansprüche.

Nachfolgend wird die Erfindung im einzelnen anhand der beigefügten Zeichnung erläutert. Es zeigen:
- Figur 1: ein Blockdiagramm, in dem ein erster Teil des Ablaufs eines Verfahrens zur Übertragung digitaler Signaltöne dargestellt ist;
- Figur 2: ein weiteres Blockdiagramm, in dem der zweite Teil des Ablaufs des Verfahrens aus Figur 1 dargestellt ist;
- Figur 3: eine Darstellung der Datenstruktur einer von einem ersten Media Gateway Controller an einen zweiten Media Gateway Controller gesendeten Nachricht;
- Figur 4: eine Darstellung der Datenstruktur eines in der Nachricht aus Figur 3 enthaltenen Informationsele- ments;
- Figur 5: eine Darstellung der Datenstruktur der vom zweiten Media Gateway Controller an den ersten Media Gate- way Controller übermittelten Nachricht;
- Figur 6: eine Darstellung der Datenstruktur einer vom ersten Media Gateway Controller an den zweiten Media Gate- way Controller gesendeten Bestätigung;
- Figur 7: ein Blockdiagramm mit dem ersten Teil des Ablaufs eines Verfahrens zur Übertragung von DTMF Signaltö- nen in heterogenen Netzen;
- Figur 8: ein Blockdiagramm, in dem der zweite Teil des Ab- laufs des Verfahrens aus Figur 7 dargestellt ist; und
- Figur 9: eine Darstellung der Datenstruktur einer Nachricht vom zweiten Media Gateway Controller an den ersten Media Gateway Controller, die das vom zweiten Media Gateway Controller ausgewählte Übermittlungsverfah- ren enthält.

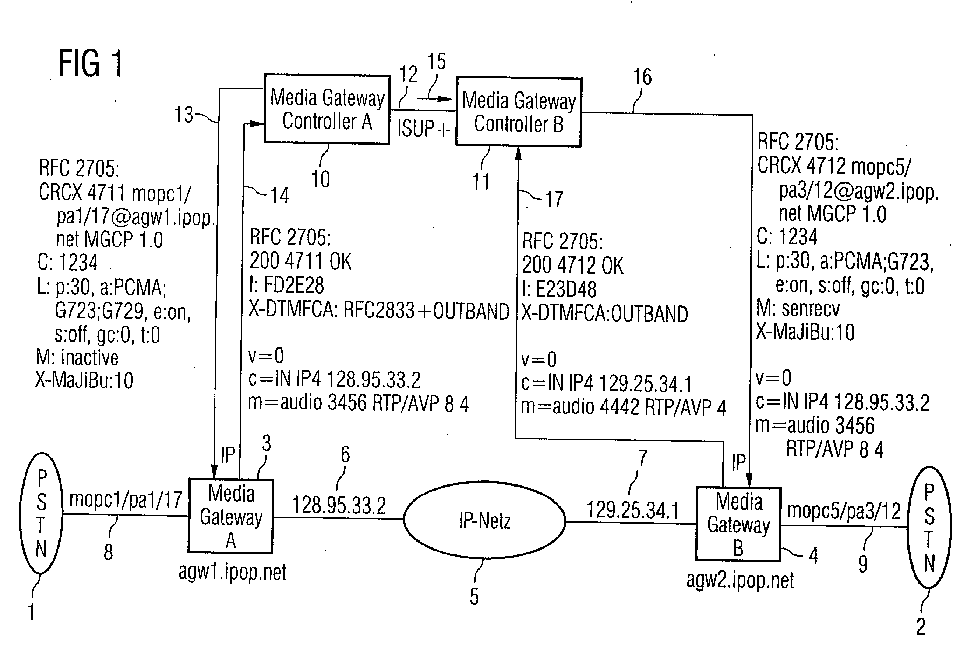

In Figur 1 sind zwei Leitungsnetze 1 und 2 dargestellt, die jeweils über ein Media Gateway 3 und 4 mit einem IP-Netz 5 verbunden sind. Die Im IP-Netz 5 verfügen die Media Gateways 3 und 4 über IP-Adressen GwA und GwB und vergeben für eine Sprachverbindung IP-Adressen 6 und 7. Die Media Gateways 3 und 4 sind über die PCM(Pulse Code Modulation)-Leitungen 8 und 9 an die Leitungsnetzen 1 und 2 angeschlossen, die über SS7-Signalisierung adressiert werden. Die Media Gateways 3 und 4 wirken als Konverter zwischen den Leitungsnetzen 1 und 2 und dem IP-Netz 5, da sie die Datenformate der Leitungsnetze 1 und 2 in das Datenformat des IP-Netzes 5 umsetzen und umgekehrt. Die Media Gateways 3 und 4 werden nachfolgend kurz auch als MG 3 und 4 bezeichnet.

Den Media Gateways 3 und 4 sind die Media Gateway Controller 10 und 11 zugeordnet, die über ein Signalisierungsnetz 12 untereinander kommunizieren. Bei dem Signalisierungsnetz 12 kann es sich beispielsweise um das übliche SS7-Netz handeln. Über die Media Gateway Controller 10 und 11 werden die MGs 3 und 4 gesteuert. Die Media Gateway Controller 10 und 11 haben daher die Funktion von Konvertersteuerungen. Nachfolgend werden die Media Gateway Controller kurz als MGC 10 und 11 bezeichnet.

Das MG 3 bildet zusammen mit dem MGC 10 eine das Paketnetz 5 mit dem Leitungsnetz 1 verbindende Übermittlungsstelle, die auf der nachfolgend mit A-Seite bezeichneten Seite der Sprachverbindung über das IP-Netz 5 angeordnet ist.

Gleichermaßen bildet das MG 4 zusammen mit dem MGC 11 eine weitere das Paketnetz 5 mit dem Leitungsnetz 2 verbindende Übermittlungsstelle, die auf der nachfolgend als B-Seite bezeichneten Seite der Sprachverbindung angeordnet ist.

Zu Beginn des Verbindungsaufbaus sendet der MGC 10 auf der A-Seite an das MG 3 auf der A-Seite eine Aufforderung 13 in der Form eines CRCX(Create Connection)-Befehls gemäß RFC2705 (MGCP). Die standardisierten Parameter dieses Befehls sind in Figur 1 dargestellt und werden nicht näher erläutert. Das MG 3 antwortet mit einer Meldung 14, in der dem MGC 10 sowohl die unterstützten Übermittlungsverfahren als auch die verwendbaren Codecs mitgeteilt werden. Die Datenstruktur der Mitteilung 14 richtet sich nach RFC2705(MGCP), wobei diese Datenstruktur um einen Parameter X-DTMFCA ergänzt worden ist, der Informationen über die vom MG 3 auf der A-Seite unterstützten Übermittlungsverfahren enthält. Der Parameter X-DTMFCA soll dabei folgende Werte annehmen können:

| | |
|---|---|
| X-DTMFCA: RFC2833 | das MG unterstützt die Übertragung von DTMF-Signaltönen mit Hilfe eines RTP-Datenstroms gemäß RFC2833; |

| | |
|---|---|
| X-DTMFCA: OUTBAND | das MG unterstützt die OUTBAND- Übertragung von DTMF-Signaltönen; |
| X-DTMFCA: RFC2833 + OUTBAND | das MG unterstützt die RTP-Übertragung nach RFC2833 und die OUTBAND-Übertragung; und |
| X-DTMFCA: NONE | das MG unterstützt kein besonderes Übertragungsverfahren für DTMF-Signaltöne. |

Die Mitteilung 14 enthält den Parameter X-DTMFCA, der im vorliegenden Fall auf den Wert RFC2833 + OUTBAND gesetzt ist. Außerdem enthält die Mitteilung 14 die vom MG 3 unterstützten Codecs. Die unterstützten Codecs werden innerhalb einer SDP-Beschreibungseinheit(SDP-Session nach RFC2327) im Parameter m = Audio 3456 RTP/AVP 8 4 angegeben. Die "8" bedeutet, daß ein nicht-komprimierender Codec nach G.711 unterstützt wird, während die "4" auf einen komprimierenden Codec nach G.723 hinweist. Daneben ist in dem Parameter m noch der Port 3456 angegeben. Außerdem enthält die Meldung 14 im Parameter c noch die IP-Adresse 6, die das MG 3 auf der A-Seite für die Sprachverbindung vergeben hat.

Anschließend sendet der MGC 10 auf der A-Seite eine Mitteilung 15 an den MGC 11 auf der B-Seite, in der dem MGC 11 auf der B-Seite die vom MG 3 auf der A-Seite unterstützten Übermittlungsverfahren für DTMF-Signaltöne mitgeteilt werden. Die Datenstruktur dieser Mitteilung wird im folgenden noch näher erläutert werden.

Anschließend sendet der MGC 11 auf der B-Seite eine Aufforderung 16 an den zugeordneten MG 4 auf der B-Seite eine Sprachverbindung über das Internet zu dem MG 3 auf der A-Seite einzurichten. Dies geschieht in der Form eines CRCX (Create Connection)-Befehls gemäß RFC2705(MGCP). In der Mitteilung 15 werden dem MG 4 auf der B-Seite die vom MG 3 auf der A-Seite für die Sprachverbindung vergebene IP-Adresse 6 sowie die vom MG 3 auf der A-Seite unterstützten Codecs mitgeteilt. Auf die Aufforderung 16 hin antwortet das MG 4 auf der B-Seite mit einer Meldung 17, die ebenso wie die Meldung 14 den Parameter X-DTMFCA enthält. Außerdem enthält die Meldung 17 die IP-Adresse 7 des MG4 auf der B-Seite sowie die von den MG 4 unterstützten Codecs. Aus der Meldung 17 entnimmt der MGC 11 auf der B-Seite, daß vom MG 4 auf der B-Seite lediglich ein komprimierender Codec nach G.723 und die OUTBAND-Übertragung von DTMF-Signaltönen unterstützt wird.

Der MGC 11 auf der B-Seite wählt dann die OUTBAND-Übertragung aus, da im vorliegenden Fall nur die OUTBAND-Übertragung vom MG 3 auf der A-Seite und dem MG 4 auf der B-Seite unterstützt wird.

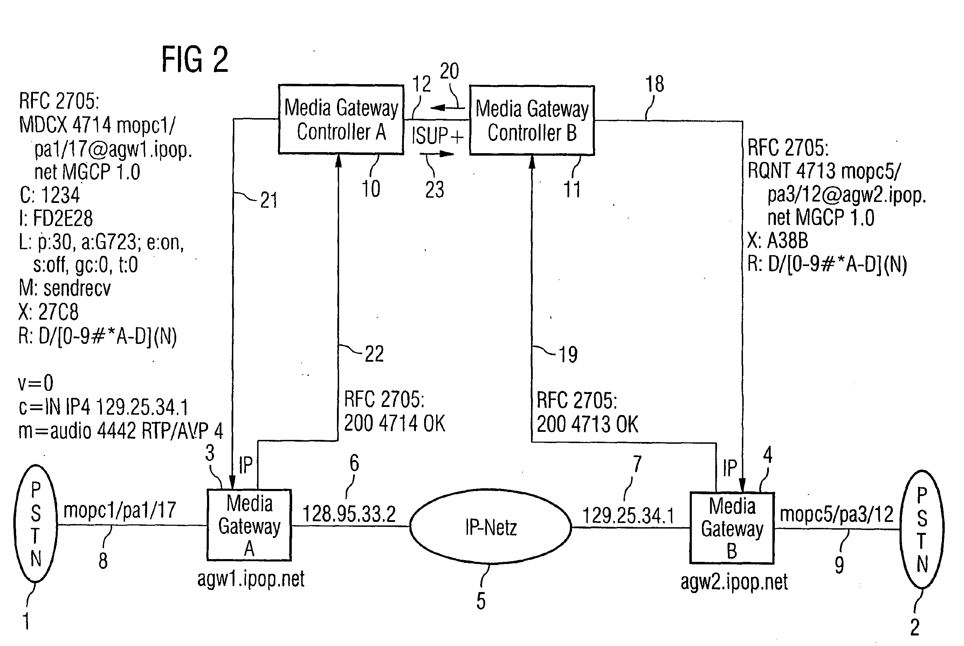

Gemäß Figur 2 sendet der MGC 11 auf der B-Seite daraufhin eine Aufforderung 18 an den MG 4 auf der B-Seite, das Auftreten von digitalen Signaltönen an den MGC 11 auf der B-Seite zu melden. Dies erfolgt in der Form eines RQNT (Notification Request)-Befehls gemäß RFC2705(MGCP). In diesem Befehl enthält der Parameter R die Aufforderung an das MG 4, auf der B-Seite auftretende DTMF-Signaltöne an den MGC 11 auf der B-Seite zu melden, damit dieser eine entsprechende Nachricht an den MGC 10 auf der A-Seite senden kann, so daß die vom MG 4 auf der B-Seite aus dem Datenstrom entfernten DTMF-Signaltöne von MG3 auf der A-Seite wieder in den Datenstrom eingefügt werden können.

Die Aufforderung 18 des MGC 11 auf der B-Seite an das MG 4 auf der B-Seite wird von dem MG 4 auf der B-Seite ausgeführt und mit einer Bestätigung 19 gemäß RFC2705(MGCP) quittiert.

Das MGC 11 auf der B-Seite sendet daraufhin eine Mitteilung 20 an den MGC 10 auf der A-Seite. Bei dieser Mitteilung 20 handelt es sich um eine Nachricht gemäß dem BICC-Protokol nach Q.763/Q.765.5, die daher auch als ISUP+-Nachricht bezeichnet werden kann. Die Datenstruktur der Mitteilung 20 wird ebenso wie die Datenstruktur der Mitteilung 15 nachfolgend näher erläutert werden.

Auf die Mitteilung 20 hin setzt der MGC 10 auf der A-Seite eine Aufforderung 21 an das MG 3 auf der A-Seite ab, die Sprachverbindung über das IP-Netz 5 entsprechend dem vom MGC 11 auf der B-Seite ausgewählten Übermittlungsverfahren zu modifizieren. Zu diesem Zweck wird ein Befehl in der Form eines MDCX(Modified Connection)-Befehls nach RFC2705(MGCP) verwendet, wobei der Parameter R die Aufforderung an das MG 3 auf der A-Seite enthält, das Auftreten von DTMF-Signaltönen dem MGC 10 auf der A-Seite zu melden, damit das MGC 10 auf der A-Seite eine entsprechende Mitteilung an das MGC 11 auf der B-Seite senden kann, so daß das MG 4 auf der B-Seite in der Lage ist, die vom MG 3 auf der A-Seite aus dem Datenstrom entfernten DTMF-Signaltöne wieder in den Datenstrom einzufügen.

Das MG 3 auf der A-Seite führt die Aufforderung 21 aus und quittiert die Aufforderung 21 des MGC 10 auf der A-Seite mit einer Meldung 22 nach RFC2705(MGCP).

Das MGC 10 auf der A-Seite sendet daraufhin eine Mitteilung 23 an das MGC 11 auf der B-Seite, um dem MGC 11 auf der B-Seite mitzuteilen, daß der Verbindungsaufbau auf der A-Seite abgeschlossen ist. Mit dieser Mitteilung 23 ist der Verbindungsaufbau einer Sprachverbindung über das IP-Netz 5 beendet.

Nachfolgend wird die Datenstruktur der Mitteilungen 15, 20 und 23 näher erläutert.

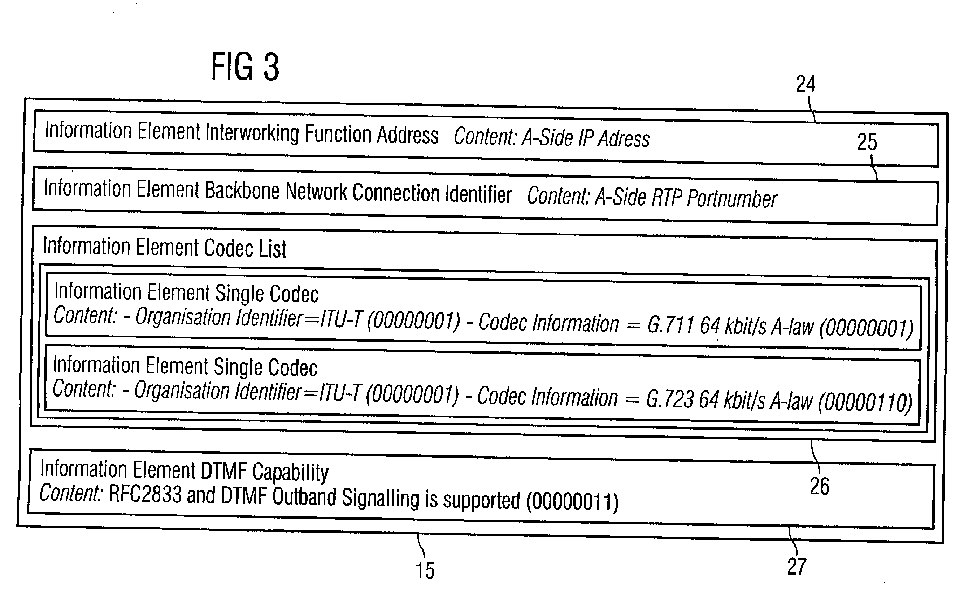

In Figur 3 ist die Datenstruktur der Mitteilung 15 näher dargestellt. Dabei handelt es sich um eine modifizierte IAM (Initial Address Message) gemäß dem BICC-Protokoll nach Q.763/Q.765.5(ISUP+). Insbesondere wird die Information über das MG 3 auf der A-Seite mit Hilfe des APP (Application Transport Parameter) übertragen, der im Rahmen der Empfehlung Q.763 der ITU-T spezifiziert ist. In dem Dokument ITU-T Q.763/AMD.1 (03/2001), Prepublished Version, findet sich eine genaue Beschreibung des APP. Der APP enthält neben einem in der Figur 3 dargestellten Datenkopf eine Liste von Informationselementen.

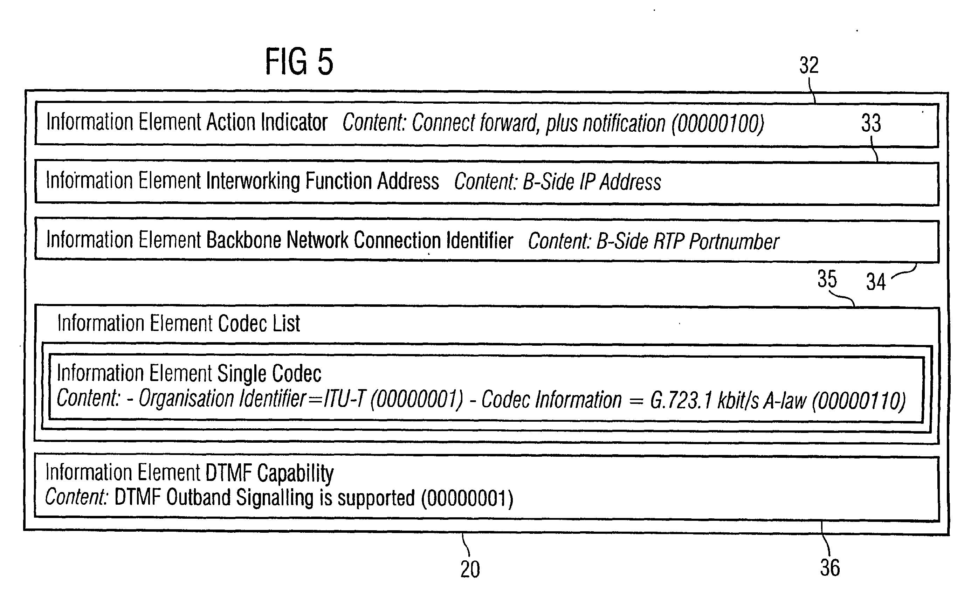

Ein erstes Informationselement 24 enthält die IP-Adresse 6 die das MG 3 auf der A-Seitefür die Sprachverbindung vergeben hat. Ein zweites Informationselement 25 enthält die Nummer des vom MG 3 auf der A-Seite verwendeten RTP-Ports, während ein weiteres Informationselement 26 eine Liste der vom MG 3 auf der A-Seite unterstützten Codecs enthält. Die Informationselemente 24 bis 26 sind bereits im Standard Q.763/Q.765.5 spezifiziert. Neu ist dagegen ein Informationselement 27, das die vom MG 3 auf der A-Seite unterstützten Übermittlungsverfahren beschreibt und in Figur 5 mit "DTMF Capability" bezeichnet ist.

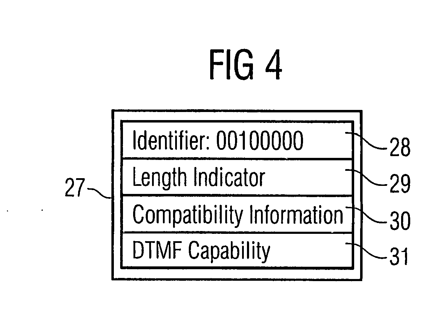

In Figur 4 ist die Datenstruktur des Informationselements 27 im einzelnen dargestellt. Zu Beginn steht eine Identifikationsmarke 28, der ein Längenindikator 29 folgt. Außerdem enthält das Informationselement 27 Informationen 30 zur Kompatibilität und Angaben 31 zu dem vom MG 3 auf der A-Seite unterstützten Übermittlungsverfahren für die DTMF-Signaltöne. Für die Angabe 31 wird folgender Code vorgeschlagen:

| | |
|---|---|
| 00000001 | die OUTBAND-Übertragung von DTMF-Signaltönen mit Hilfe des Signalisierungsnetzes 12 wird unterstützt; |
| 00000010 | die RTP-Übertragung nach RFC2833 wird unterstützt; |
| 00000011 | die OUTBAND-Übertragung mit Hilfe des Signalisierungsnetzes 12 und die RTP-Übertragung nach RFC2833 wird unterstützt. |

Im vorliegenden Fall ist die Angabe 31 gleich 00000011 gesetzt. Das bedeutet, daß vom MG 3 auf der A-Seite sowohl die RTP-Übertragung als auch die OUTBAND-Übertragung unterstutzt wird.

In Figur 5 ist die Datenstruktur der Mitteilung 20 dargestellt. Die Mitteilung 20 erfolgt wie die Mitteilung 15 im BICC-Protokoll nach der Norm Q.763/Q.765.5(ISUP+). Insbesondere wird die Information über das MG 4 auf der B-Seite mit Hilfe des APP (Application Transport Parameter) übertragen, der im Rahmen der Empfehlung Q.763 der ITU-T spezifiziert ist. Der APP enthält wie bereits erwähnt neben einem in der Figur 5 nicht dargestellten Datenkopf eine Liste von Informationselelementen.

Ein erstes Informationselement 32 enthält eine Aktionsbeschreibung, während weitere Informationselemente 33 und 34 die vom MG 4 auf der B-Seite vergebene IP-Adresse 7 und die Nummer des vom MG 4 auf der B-Seite verwendeten RTP-Ports für die eigentliche Sprachverbindung über das IP-Netz 5 enthält. Ein weiteres Informationselement 35 enthält den vom MGC 11 auf der B-Seite ausgewählten Codec. Im vorliegenden Fall ist das der komprimierende Codec nach G.723.1. Da durch einen komprimierenden Codec DTMF-Signaltöne nicht ohne weiteres über das IP-Netz 5 übertragen werden können, enthält die Mitteilung 20 zusätzlich ein weiteres Informationselement 36, das das vom MGC 11 auf der B-Seite ausgewählte Übermittlungsverfahren beschreibt. Dieses Informationselement 36 ist in Figur 5 ebenso wie das Informationselement 27 in den Figuren 3 und 4 mit. "DTMF-Capability" bezeichnet und entsprechend kodiert.

Es sei angemerkt, daß bei Auswahl eines nicht komprimierenden Codecs, zum Beispiel nach G.711, durch den MGC 11 auf der B-Seite das Informationselement 36 entfällt, da in diesem Fall die Übermittlung der DTMF-Signaltöne unmittelbar ohne die Anwendung besonderer Verfahren über das IP-Netz 5 erfolgt.

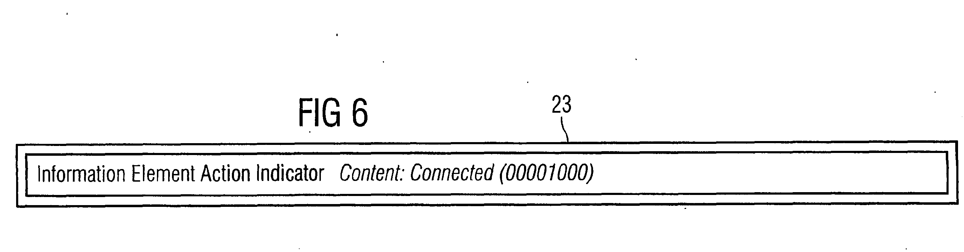

Figur 6 zeigt schließlich die Datenstruktur der Mitteilung 23, die im APP ein einzelnes Informationselement 37 aufweist, das den Zustand des Verbindungsaufbaus anzeigt.

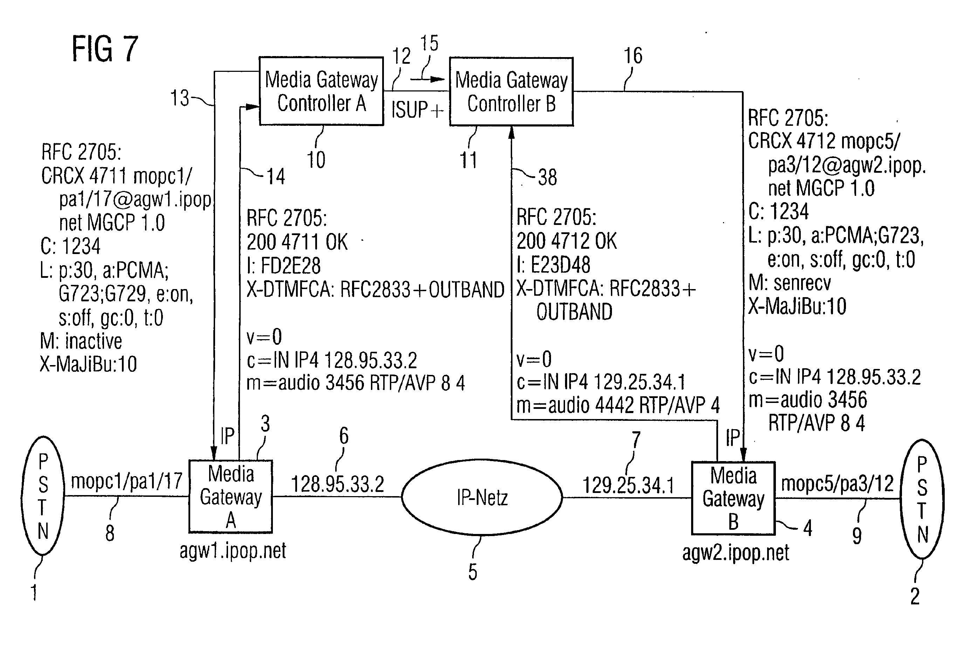

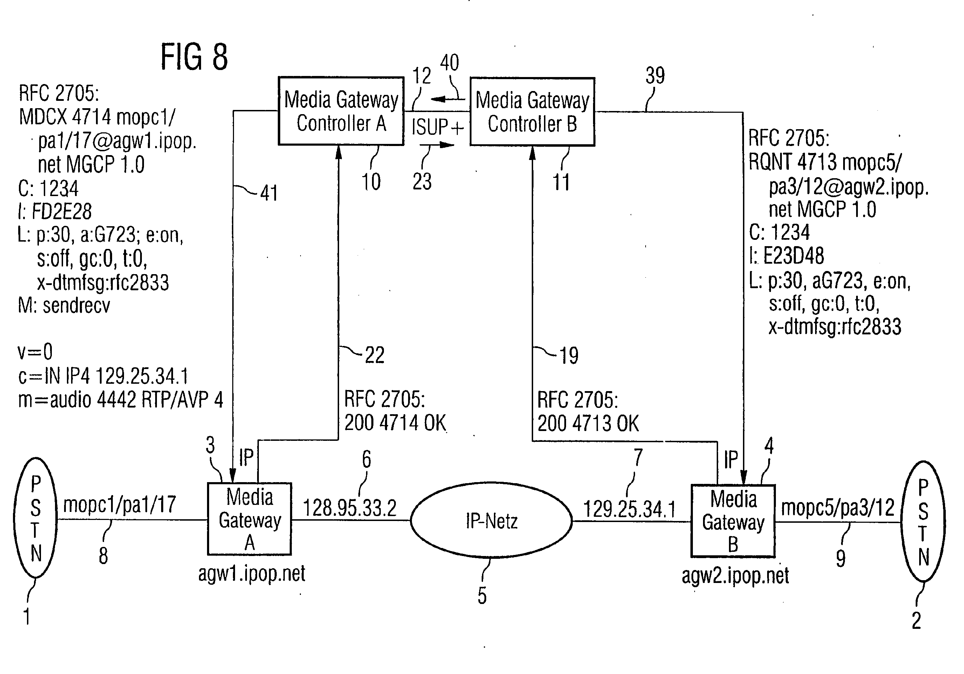

In den Figuren 7 und 8 sind Blockdiagramme eines weiteren Ausführungsbeispiels dargestellt. Das Ausführungsbeispiel der Figuren 7 und 8 unterscheidet sich von dem Ausführungsbeispiel der Figuren 1 und 2 dadurch, daß bei dem in den Figuren 7 und 8 dargestellten Ausführungsbeispiel das MG 4 auf der B-Seite nicht nur die OUTBAND-Übertragung, sondern auch die RTP-Übertragung nach RFC2833 unterstützt. Dementsprechend antwortet das MG 4 auf der B-Seite auf die Anforderung 16 des MGC 11 auf der B-Seite mit einer Meldung 38, in der der Parameter X-DTMFCA auf den Wert RFC2833 + OUTBAND gesetzt worden ist.

Da bei der OUTBAND-Übertragung von DTMF-Signaltönen Verzögerungen im Millisekundenbereich zwischen dem Aussenden und dem Empfang der DTMF-Signaltöne auftreten, ist die RTP-Übertragung der DTMF-Signaltöne gemäß RFC2833 zu bevorzugen. Dementsprechend wählt nun der MGC 11 auf der B-Seite die RTP-Übertragung nach RFC2833 aus und richtet eine modifizierte Aufforderung 39 nach RFC2705(MGCP) an das MG 4 auf der B-Seite, wobei in den Optionen zum Parameter L eine zusätzliche Option x-dtmfsg:rfc2833 dafür sorgt, daß das MG 4 auf der B-Seite die Übermittlung der digitalen Signaltöne unmittelbar über das IP-Netz 5 mittels RTP nach RFC2833 vornimmt.

Außerdem übermittelt das MGC 11 auf der B-Seite eine Mitteilung 40 über das Signalisierungsnetz 12 an das MGC 10 auf der A-Seite. In der Mitteilung 40 wird dem MGC 10 auf der A-Seite die Auswahl des MGC 11 auf der B-Seite mitgeteilt. Dementsprechend richtet das MGC 10 auf der A-Seite eine Aufforderung 41 nach RFC2705(MGCP) an das MG 3 auf der A-Seite. Die Aufforderung 41 enthält wie die Aufforderung 39 im Parameter L die zusätzliche Option x-dtmfsg:rfc2833, wodurch dem MG 3 auf der A-Seite angezeigt wird, daß es die Übermittlung der DTMF-Signaltöne unmittelbar über das IP-Netz 5 mittels RTP nach RFC2833 vornehmen soll.

Das MG 3 auf der A-Seite und das MG 4 auf der B-Seite reagieren auf die Aufforderungen 39 und 41 jeweils mit den üblichen Meldungen 19 und 22 nach RFC2705(MGCP).

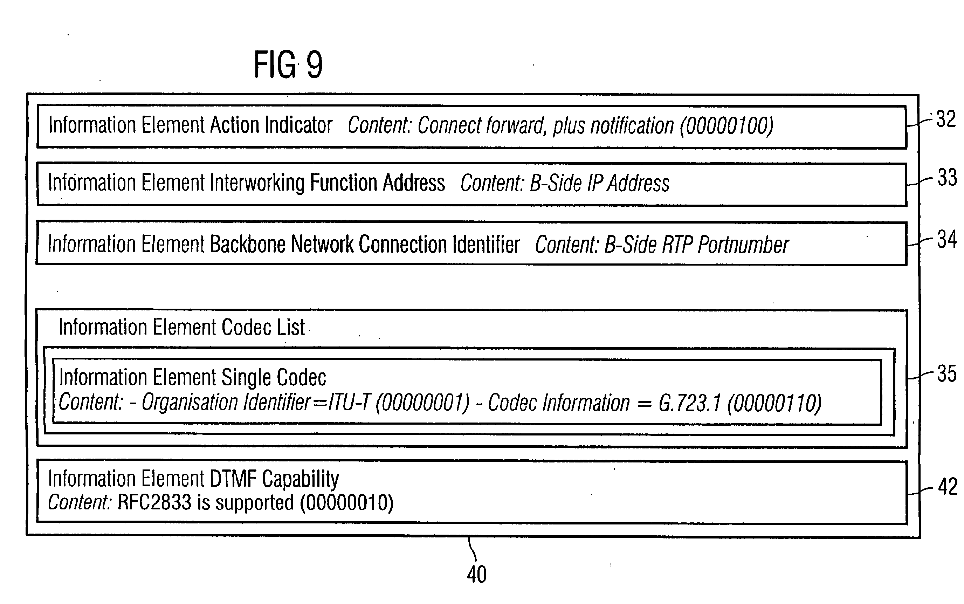

In Figur 9 ist nochmals die Datenstruktur der modifizierten Mitteilung 40 dargestellt. Die Mitteilung 40 entspricht hinsichtlich der Informationselemente 32 bis 35 der Mitteilung 20 des Ausführungsbeispiels aus den Figuren 1 und 2. Lediglich ein dem Informationselement 27 in Figur 3 entsprechendes, mit "DTMF Capability" bezeichnetes Informationselement 42 enthält nunmehr die Mitteilung, daß die Übermittlung der digitalen Signaltöne mittels RTP nach RFC2833 erfolgen soll.

Es sei darauf hingewiesen, daß das beschriebene Verfahren nicht notwendigerweise nach dem MGCP-Standard nach RFC2705 implementiert werden muß. Auch eine analoge Implementierung durch eine Modifikation des Megaco(H.248)-Standards ist möglich. Bei einer derartigen Implementierung würde insbesondere die Kommunikation zwischen dem Media Gateway 3 und 4 und dem Media Gateway Controller 10 und 11 gemäß dem Megaco-Protokoll (H.248) erfolgen. Die Parametererweiterungen X-DTMFCA und x-dtmfsg sind dann analog in den Verfahrenschritten zu implementieren, die den Meldungen 14 und 17 und den Aufforderungen 39 und 41 entsprechen.

Grundsätzlich kommt auch eine Implementierung in weiteren dem MGCP-Standard oder dem Megaco-Standard entsprechenden Standards in Frage.

Wesentlich für das hier beschriebene Verfahren ist lediglich, daß das MGC 11 auf der B-Seite die Auswahl einer möglichen Kombination von Übermittlungsverfahren für die DTMF-Signaltöne vornimmt und dem MGC 10 auf der A-Seite über das Signalisierungsnetz 12 signalisiert. Falls das MG 3 auf der A-Seite und das MG 4 auf der B-Seite ein gemeinsames Übermittlungsverfahren für digitale Signaltöne aufweisen, kommt unter Vermittlung der MGC 10 und 11 immer eine Verbindung zustande. Von besonderem Vorteil ist dabei, daß jeweils das am geeignetsten erscheinende Übermittlungsverfahren für die DTMF-Signaltöne ausgewählt werden kann.

Abschließend sei darauf hingewiesen, daß Begriffe, wie Übermittlungsstelle, Konverter, Konvertersteuerung, Media Gateway und Media Gateway Controller funktional zu verstehen sind. Diese logischen Einheiten müssen nicht notwendig physikalische Einheiten bilden, sondern können auch in einer physikalischen Einheit in der Form von Software realisiert oder umgekehrt über mehrere physikalischen Einheiten verteilt sein.

## Patentansprüche

1. Verfahren zur Auswahl eines Übermittlungsverfahrens für Signaltöne in heterogenen Netzen mit
- einer ersten Übermittlungsstelle (3, 10) zwischen einem Paketnetz (5) und einem erstem Leitungsnetz (1); und
- einer zweiten Übermittlungsstelle (4, 11) zwischen dem Paketnetz und einem zweiten Leitungsnetz (2);
mit den Verfahrensschritten:
(a) Mitteilung der für die Signaltöne verwendbaren Übermittlungsverfahren, die von der ersten Übermittlungsstelle unterstützt werden, von der ersten Übermittlungsstelle über ein Signalisierungsnetz (12) an die zweite Übermittlungsstelle;
(b) Auswahl eines sowohl von der ersten Übermittlungsstelle als auch der zweiten Übermittlungsstelle unterstützten Übermittlungsverfahrens für die Signaltöne durch die zweite Übermittlungsstelle;
(c) Mitteilung des von der zweiten Übermittlungsstelle ausgewählten Übermittlungsverfahrens an die erste Übermittlungsstelle.

2. Verfahren nach Anspruch 1, bei dem für die erste Übermittlungsstelle ein das Paketnetz und das erste Leitungsnetz verbindender erster Konverter (3) und für die zweite Übermittlungsstelle ein das Paketnetz und das zweite Leitungsnetz verbindender zweiter Konverter (4) verwendet wird.

3. Verfahren nach Anspruch 2, bei dem für die erste Übermittlungsstelle eine dem ersten Konverter zugeordnete und mit dem Signalisierungsnetz verbundene erste Konvertersteuerung (10) und für die zweite Übermittlungsstelle eine dem zweiten Konverter zugeordnete und mit dem Signalisierungsnetz verbundene zweite Konvertersteuerung (11) verwendet wird.

4. Verfahren nach Anspruch 3, bei dem die von dem ersten Konverter unterstützten Übermittlungsverfahren von der ersten Konvertersteuerung über das Signalisierungsnetz der zweiten Konvertersteuerung mitgeteilt werden.

5. Verfahren nach Anspruch 4, bei dem die zweite Konvertersteuerung das Übermittlungsverfahren für die Signaltöne auswählt.

6. Verfahren nach Anspruch 5, bei dem die zweite Konvertersteuerung das ausgewählte Übermittlungsverfahren für die Signaltöne über das Signalisierungsnetz der ersten Konvertersteuerung mitteilt.

7. Verfahren nach einem der Ansprüche 4 bis 6, bei dem die Mitteilungen (15, 20) bezüglich des Übermittlungsverfahrens für die Signaltöne zwischen der ersten Konvertersteuerung und der zweiten Konvertersteuerung neben einem Informationselement (26, 35) für die von den Konvertern unterstützten Codecs ein weiteres Informatiönselement (27, 36, 42), das einen spezifischen Parameter enthält, umfassen, wobei das weitere Informationselement neben dem Informationselement aufgelistet ist.

8. Verfahren nach einem der Ansprüche 3 bis 7, bei dem der erste oder der zweite Konverter der jeweils zugeordneten ersten oder zweiten Konvertersteuerung das unterstützte Übermittlungsverfahren für Signaltöne jeweils durch einen spezifizierten Parameter innerhalb einer Meldung (14, 17) mitteilt, mit der der jeweiligen Konvertersteuerung die vom jeweiligen Konverter unterstützten Codecs mitgeteilt werden.

9. Verfahren nach einem der Ansprüche 3 bis 8, bei dem die erste oder die zweite Konvertersteuerung dem jeweils zugeordneten ersten oder zweiten Konverter das einzustellende Übermittlungsverfahren jeweils durch einen spezifizierten Parameter innerhalb einer Aufforderung (39, 41) mitteilt, mit der dem jeweiligen Konverter die von dem Konverter auf der Gegenseite unterstützten Codecs von der zugehörigen Konvertersteuerung mitgeteilt werden.

10. Verfahren nach einem der Ansprüche 1 bis 9, bei dem eine Übermittlung über das Paketnetz als Übermittlungsverfahren für die Signaltöne ausgewählt wird.

11. Verfahren nach einem der Ansprüche 3 bis 10, bei dem ein Übermittlungsverfahren ausgewählt wird, bei dem die Signaltöne vom Konverter aus dem Datenstrom entfernt und über die Konvertersteuerung über das Signalisierungsnetz übertragen werden.

12. Vorrichtung zur Konversion von Informationsströmen bei einer ersten Übermittlungsstelle (3, 10) zwischen einem ersten Leitungsnetz (1) und einem Paketnetz (5) sowie bei einer zweiten Übermittlungsstelle (4, 11) zwischen dem Paketnetz und einem zweiten Leitungsnetz (2), umfassend Mittel, die zur Ausführung eines Verfahrens nach einem der Ansprüche 1 bis 11 eingerichtet ist.

13. Vorrichtung nach Anspruch 12, die einen mit dem Paketnetz und dem Leitungsnetz verbindbaren Konverter (3, 4) und eine mit einem Signalisierungsnetz (12) verbinbare Konvertersteuerung (10, 11) aufweist.

14. Computerprogrammprodukt zum Betrieb einer Übermittlungsstelle (3, 4, 10, 11) zwischen einem Paketnetz (5) und einem Leitungsnetz (1, 2), das Programmcode zur Ausführung eines Verfahrens nach einem der Ansprüche 1 bis 11 enthält.

## Claims

1. Method for selecting a transmission method for signal tones in heterogeneous networks with
- a first transmission station (3, 10) between a packet network (5) and a first line network (1); and
- a second transmission station (4, 11) between the packet network and a second line network (2);
with the method steps:
(a) Notification of the transmission methods which can be used for the signal tones and which are supported by the first transmission station, from the first transmission station via a signalling network (12) to the second transmission station;
(b) Selection by the second transmission station of a transmission method for the signal tones supported by both the first transmission station and the second transmission station;
(c) Notification of the transmission method selected by the second transmission station to the first transmission station.

2. Method according to Claim 1, in which a first converter (3) connecting the packet network and the first line network is used for the first transmission station and a second converter (4) connecting the packet network, and a second line network is used for the second transmission station.

3. Method according to Claim 2, in which a first converter control (10) allocated to the first converter and connected to the signalling network is used for the first transmission station, and a second converter control (11) allocated to the second converter and connected to the signalling network is used for the second transmission station.

4. Method according to Claim 3, in which the transmission methods supported by the first converter are notified by the first converter control via the signalling network to the second converter control.

5. Method according to Claim 4, in which the second converter control selects the transmission method for the signal tones.

6. Method according to Claim 5, in which the second converter control notifies the selected transmission method for the signal tones via the signalling network to the first converter control.

7. Method according to one of Claims 4 to 6, in which the notifications (15, 20) relating to the transmission method for the signal tones between the first converter control and the second converter control comprise not only an information element (26, 35) for the codecs supported by the converters, but also a further information element (27, 36, 42) containing a specific parameter, whereby the further information element is listed along with the information element.

8. Method according to one of Claims 3 to 7, in which the first or the second converter of the respective allocated first or second converter control notifies the supported transmission method for signal tones in each case by means of a specific parameter within a message (14, 17), with which the codecs supported by the respective converter are notified to the respective converter control.

9. Method according to one of Claims 3 to 8, in which the first or the second converter control notifies the respective allocated first or second converter of the transmission method to be set in each case by means of a specified parameter within a prompt (39, 41), with which the codecs supported by the converter at the distant end are notified by the associated converter control to the respective converter.

10. Method according to one of Claims 1 to 9, in which a transmission via the packet network is selected as the transmission method for the signal tones.

11. Method according to one of Claims 3 to 10, in which a transmission method is selected in which the signal tones are removed by the converter from the data stream and are transmitted via the converter control via the signalling network.

12. Device for converting information streams in a first transmission station (3, 10) between a first line network (1) and a packet network (5) and in a second transmission station (4, 11) between the packet network and a second line network (2) comprising means which are designed to carry out a method according to one of Claims 1 to 11.

13. Device according to Claim 12, which has a converter (3, 4) which can be connected to the packet network and the line network, and a converter control (10, 11) which can be connected to a signalling network (12).

14. Computer program product for operating a transmission station (3, 4, 10, 11) between a packet network (5) and a line network (1, 2), containing program code to carry out a method according to one of Claims 1 to 11.

## Revendications

1. Procédé pour sélectionner un procédé de transmission de tonalités de signalisation dans des réseaux hétérogènes, comportant
- un premier centre de transmission (3, 10) entre un réseau par paquets (5) et un premier réseau de lignes (1) et
- un deuxième centre de transmission (4, 11) entre le réseau par paquets et un réseau de lignes (2),
comportant les étapes suivantes :
(a) communication, du premier centre de transmission au deuxième centre de transmission via un réseau de signalisation (12), des procédés de transmission utilisables pour les tonalités de signalisation et supportés par le premier centre de transmission
(b) sélection, par le deuxième centre de transmission, d'un procédé de transmission des tonalités de signalisation supporté tant par le premier centre de transmission que par le deuxième centre de transmission,
(c) communication du procédé de transmission sélectionné par le deuxième centre de transmission au premier centre de transmission.

2. Procédé selon la revendication 1, dans lequel sont utilisés, pour le premier centre de transmission, un premier convertisseur (3) reliant le réseau par paquets et le premier réseau de lignes et, pour le deuxième centre de transmission, un deuxième convertisseur (4) reliant le réseau par paquets et le deuxième réseau de lignes.

3. Procédé selon la revendication 2, dans lequel sont utilisées, pour le premier centre de transmission, une première commande de convertisseur (10) associée au premier convertisseur et reliée au réseau de signalisation et, pour le deuxième centre de transmission, une deuxième commande de convertisseur (11) associée au deuxième convertisseur et reliée au réseau de signalisation.

4. Procédé selon la revendication 3, dans lequel les procédés de transmission supportés par le premier convertisseur sont communiqués par la première commande de convertisseur à la deuxième commande de convertisseur via le réseau de signalisation.

5. Procédé selon la revendication 4, dans lequel la deuxième commande de convertisseur sélectionne le procédé de transmission des tonalités de signalisation.

6. Procédé selon la revendication 5, dans lequel la deuxième commande de convertisseur communique à la première commande de convertisseur, via le réseau de signalisation, le procédé de transmission des tonalités de signalisation sélectionné.

7. Procédé selon l'une des revendications 4 à 6, dans lequel les communications (15, 20) relatives au procédé de transmission des tonalités de signalisation entre la première commande de convertisseur et la deuxième commande de convertisseur comportent, outre un élément d'information (26, 35) pour les codecs supportés par les convertisseurs, un autre élément d'information (27, 36, 42) qui contient un paramètre spécifique, l'autre élément d'information étant listé en plus de l'élément d'information.

8. Procédé selon l'une des revendications 3 à 7, dans lequel le premier ou le deuxième convertisseur communique à la première ou à la deuxième commande de convertisseur respectivement y associée le procédé de transmission de tonalités de signalisation supporté, respectivement par le biais d'un paramètre spécifié contenu dans un message (14, 17) par lequel les codecs supportés par le convertisseur respectif sont communiqués à la commande de convertisseur respective.

9. Procédé selon l'une des revendications 3 à 8, dans lequel la première ou la deuxième commande de convertisseur communique au premier ou au deuxième convertisseur respectivement y associés le procédé de transmission à établir, respectivement par le biais d'un paramètre spécifié contenu dans une demande (39, 41) par laquelle sont communiqués au convertisseur respectif, par la commande de convertisseur associée, les codecs supportés par le convertisseur du côté opposé.

10. Procédé selon l'une des revendications 1 à 9, dans lequel une transmission sur le réseau par paquets est sélectionnée comme procédé de transmission des tonalités de signalisation.

11. Procédé selon l'une des revendications 3 à 10, dans lequel un procédé de transmission est sélectionné, dans lequel les tonalités de signalisation sont retirées du flux de données par le convertisseur et transmises par l'intermédiaire de la commande de convertisseur via le réseau de signalisation.

12. Dispositif de conversion de flux d'information au niveau d'un premier centre de transmission (3, 10) entre un premier réseau de lignes (1) et un réseau par paquets (5) ainsi qu'au niveau d'un deuxième centre de transmission (4, 11) entre le réseau par paquets et un deuxième réseau de lignes (2), comportant des moyens aménagés pour exécuter un procédé selon l'une des revendications 1 à 11.

13. Dispositif selon la revendication 12, comportant un convertisseur (3, 4) pouvant être relié au réseau par paquets et au réseau de lignes et une commande de convertisseur (10, 11) pouvant être reliée à un réseau de signalisation (12).

14. Produit de programme informatique pour faire fonctionner un centre de transmission (3, 4, 10, 11) entre un réseau par paquets (5) et un réseau de lignes (1, 2), lequel contient un code de programme pour exécuter un procédé selon l'une des revendications 1 à 11.
